# EUROPEAN PATENT APPLICATION

(11) **EP 1 256 801 A2**
(43) Date of publication of application: **13.11.2002**
(21) Application number: 02253313.7
(22) Date of filing: 13.05.2002
(51) Int. Cl.: G01N 33/24

(54) **Piezometric ground water pressure sensing apparatus**

(30) Priority: 11.05.2001 GB 0111491
(71) Applicant: Local Link international Limited, Lantau, Hong Kong SAR (CN)
(72) Inventor: Typson, Julian Peter, Lantau, Hong Kong SAR (CN)
(74) Representative: Tanner, James Percival

(57) **Abstract**

This invention provides a piezometric device to measure ground water having a fluid container in which the piezometric element is immersed so that it is permanently saturated. Preferably, an opening above the level of the piezometric element allows fluid in a container to be retained and yet equalized with surrounding ground water to provide pressure readings. This avoids the device becoming unreliable should the water level fluctuate. A releasable seal may be placed over the opening into the container 2 to keep the fluid within the housing during transportation.

## Description

### FIELD OF THE INVENTION

This invention relates to piezometic water pressure sensing apparatus and, in particular, although not necessarily solcly, such a sensor for the sensing of ground water pressures.

### BACKGROUND TO THE INVENTION

Piezometric sensors for the measuring of ground water pressures have existed for sometime. Piezometers for ground water measurement generally operate in one of two ways. In a first method, water flows freely into an open pipe and the level is measured by lowering a sonde down the pipe to record the water level. In a second method, water pressure is transferred through a saturated element and measured by equalizing the resulting pressure using an external pneumatic or hydraulic source or by matching the resonance of a vibrating wire.

Regardless of which type of sensor is utilized, such piezometers are physically installed within the ground to measure the ground water pressure and typically monitored to record the results.

One of the drawbacks of current pressure measuring piezometric sensors is that they require a fully saturated element to transfer pressures from the ground water to the pressure measuring system. The saturated element is usually a porous ceramic element. Should at anytime the saturated element become unsaturated, the pressure outside the element will no longer be transferred properly to the measuring system and the pressures measured will no longer equate to those in the ground.

In many cases, the ground water will fluctuate above and below the position of the piezometer element. Since water levels can fluctuate, in some situations it may be necessary to install sensors in currently dry ground or where the ground is susceptible to drying out in the future if for instance the ground water is only likely to be present during heavy rainfall. The use of such a sensor in a landfill, in a slope or in the ground can provide important information on the ground conditions, level of leachate or water level and pressure which, particularly in the case of slopes, may indicate the potential for instability.

With current sensor, if the saturated element is left dry for sufficient time it may dry out such that it is no longer able to record pressures accurately. The only solution in such a case is to resaturate the piezometer element and this is usually only possible if a hydraulic measurement system is being used. Otherwise, it may be necessary to replace or reinstall the piezometer.

Such sensors can also become unsaturated when placed in landfill, organic clay or peaty sites. In such sites, there is often a risk of subterranean gas building up as organic material decomposes. Such pockets of gas can surround a piezometric sensor and de-saturate the sensor even though the general ground water level may be above the sensor.

### OBJECT OF THE INVENTION

It is an object of the present invention to provide a piezometric sensor apparatus that seeks to protect the sensor from de-saturation and the need to replace or recalibrate the saturated element in such sensors. At a minimum, it is an object of the present invention to provide the public with a useful choice.

### SUMMARY OF THE INVENTION

Accordingly, in a first aspect, the invention may broadly be said to consist in a piezometric sensor apparatus comprising:
- a fluid impermeable outer housing;
- a piezometric element within said housing;
- fluid contained within said housing saturating said piezometric element; and
- at least one water pressure transmissible portion in said housing to transmit water pressure external to said housing to the fluid within said housing and thereby to said piezometric element.

Preferably said water pressure transmissible portion comprises an opening in said housing above said piezometric element such that said fluid is retained about said piezometric element and adjacent ground water pressure can transmit through said opening.

Preferably said opening is initially covered by a detachable soaling portion.

Accordingly, in a second aspect, the invention may broadly be said to consist in a method of manufacturing a piezometric sensor apparatus comprising:
- providing a water impermeable housing having at least one opening at or adjacent to an upper surface of said housing;
- placing a piezometric element within said housing;
- saturating said piezometric element with a fluid; and
- sealing said opening to seal said fluid within said housing and around said piczometric element until use.

Preferably said sensing apparatus is then calibrated.

Further aspects of this invention may become apparent to those skilled in the art to which the invention relates.

### BRIEF DESCRIPTION OF THE DRAWINGS

A preferred embodiment of the invention will now be described with reference to the following drawing in which:

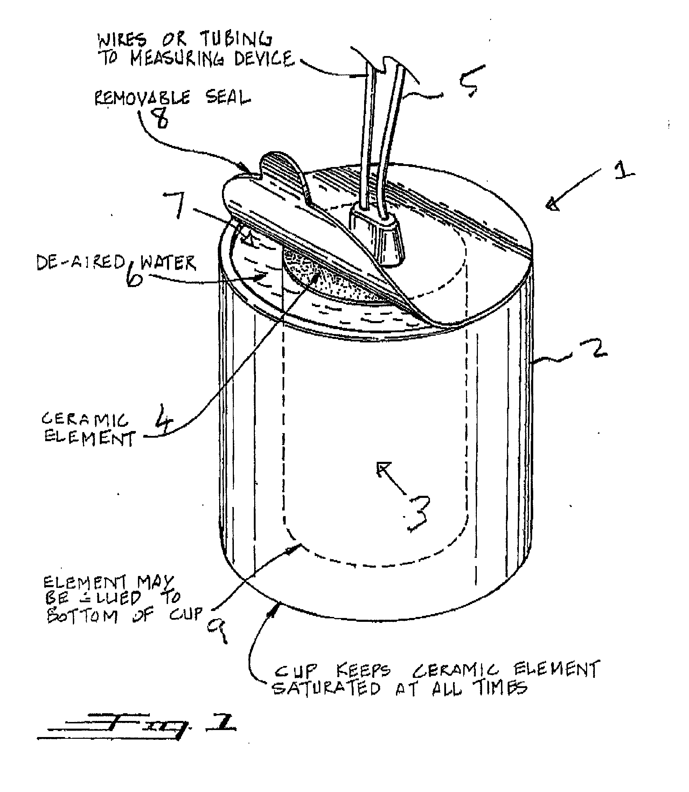

- Fig. 1 shows a perspective view of a preferred embodiment of the invention.

### DETAILED DESCRIPTION OF PREFERRED EMBODIMENTS

One particular preferred embodiment of the invention is shown in Fig. 1. In this figure, the piezometric water pressure sensing apparatus 1 provides a container 2 for retaining a fluid surrounded piezometer 3.

In this particular embodiment, the piezometer is a typical standard piezometer having a ceramic element surrounding an internal meter which is connected via suitable wires, tubing or other suitable means 5 to the remainder of the apparatus that provides an indication of the hydrostatic pressure.

As shown in Fig.1, the container 2 is fluid container carrying a suitable fluid 6. Typically, the fluid utilized may be water although other fluids are also capable of transmitting the pressure to a piezometer.

To ensure accurate readings from the piezometer, the fluid 6 is preferably substantially devoid of air in the form of bubbles or similar that can affect the eventual readings.

For operation, the container 2 requires at least one portion 7 that can transmit water pressure surrounding the device 1 to the fluid 6 within the container 2.

As shown in this preferred embodiment, the portion 7 may simply comprise an opening that is, preferably, initially sealed by a removable seal 8. The opening may be positioned higher than the metering element 3 to ensure that the fluid 6 does not flow out the opening and allow de-saturation of the piezometer 3.

In an upright installation in a bore hole or similar, such a simple device allows the removable seal 8 to be partially or fully removed and allow the ground water pressure to act directly on the fluid 6,

In alternative forms, the pressure transmissible portion 7 can comprise a flexible membrane capable of transmitting surrounding pressure to the fluid 6. To avoid soil pressure being transmitted, the flexible membrane which may be or may not be permeable may be indented into a wall of the container 2 and coverted by a mesh or similar to allow ground water to act directly on the membrane while retaining separation from surrounding soil. Such a membrane requires sufficient surface area and flexibility to allow the fluid 6 within the container 2 to equalize to the same pressure as that outside the container.

Aside from a flexible membrane, other means may be used to transmit pressure to the fluid inside the container from the ground water outside while ensuring the piezometer remains saturated.

To manufacture the device 1, the container 2 may be supplied and the piezometer 3 fitted. For stability, the piezometer 3 may be attached or fixed to the container 2 by suitable means. For example, a region of adhesive 9 may be used to fix the ceramic element 3 to the base of the fluid container 2.

Water or other fluid 6 may then be placed in the container 2 so as to surround the piezometer 3. Preferably the fluid is devoid of air and the ceramic element 4 is allowed to became fully saturated before fitment and closure of the removable seal 8.

In this form, the meter can be calibrated in a factory setting and transported to a site for use.

Using this preferred embodiment, the device may be positioned in a substantially upright configuration and the removable seal 8 detached. The device is then ready for measuring ground water pressure without risk of the device becoming unsaturated or any need to calibrate the device at that stage.

Thus it can be seen that the invention provides a piezometric device that is resistant to intermittent de-saturation from fluctuating water levels and can also avoid incorrect readings from the presence of gas bubbles within the ground water that may concur in soils with a large peat or organic clay content or mathane gas bubbles in landfills or other areas having waste products.

Due to the factory calibration, of the device, time spent on site is reduced and there may be no need to replace or recalibrate should water levels drop below that of the installed position of the piezometric device.

It is to be appreciated that the preceding description is of preferred embodiments of the invention and should not be considered liming to the scope of the invention as defined by the appended claims, Specific integers referred to throughout the description are deemed to incorporate known equivalents where appropriate.

## Claims

1. A piezometric sensor apparatus comprising:
- a fluid impermeable outer housing;
- a piezometric element within said housing;
- fluid contained within said housing saturating said piezometric element; and
- at least one water pressure transmissible portion in said housing to transmit water pressure external to said housing to the fluid within said housing and thereby to said piezometric element.

2. A piezametric sensor apparatus as claimed in claim 1 wherein said water pressure transmissible portion comprises at least one opening in said housing above said piezometric element such that said fluid is retained about said piezometric element and adjacent ground water pressure can transmit through said opening.

3. A piezometric sensor apparatus as claimed in claim 2 wherein said opening is initially covered by a detachable sealing portion.

4. A piezometric sensor apparatus as claimed in claim 1 wherein said water pressure transmissible portion comprises a flexible membrane.

5. A method of manufacturing a piezometric sensor apparatus comprising:
- providing a water impermeable housing having at least one opening at or adjacent to an upper surface of said housing;
- placing a piezometric element within said housing;
- saturating said piezometric element with a fluid; and
- sealing said opening to seal said fluid within said housing and around said piezometric element until use.

6. A method of manufacturing a piezometric sensor apparatus wherein said sensing apparatus is then calibrated.

7. A method of manufacturing a piezomotric sensor apparatus wherein said fluid is substantially devoid of air.

8. A piezometric sensor substantially as hereinbefore described and with reference to the accompanying drawing.
